# EUROPEAN PATENT APPLICATION

(11) **EP 4 538 231 A1**
(43) Date of publication of application: **16.04.2025**
(21) Application number: 23306772.7
(22) Date of filing: 11.10.2023
(51) Int. Cl.: C01B 33/24, C04B 28/18

(54) **SYNTHETIC WOLLASTONITE**

(71) Applicant: ImerTech SAS, 75015 Paris (FR)
(72) Inventor: BOURGY, Luc, 87170 Isle (FR); POILLY, Cédric, 36200 Argenton sur Creuse (FR); AZAR, Mirella, 31300 Toulouse (FR); MONS, François, 31200 Toulouse (FR); JACQUEMOT, Remy, 38080 L'Isle-d'Abeau (FR); LEYDIER, Marlene, 38080 L'Isle-d'Abeau (FR); MASGALIDES, Cédric, 69100 Villeurban (FR)
(74) Representative: Haseltine Lake Kempner LLP

(57) **Abstract**

A synthetic pseudowollastonite is defined substantially by an X-ray diffraction pattern as described herein and comprises from about 0.009 wt.% to about 0.25 wt.% Fe₂O₃.

## Description

### TECHNICAL FIELD

The present disclosure concerns new synthetic pseudowollastonite, methods of making such synthetic pseudowollastonite, methods and uses associated with such synthetic pseudowollastonite, ceramic and building material precursor compositions and articles of manufacture made from such compositions.

### BACKGROUND

Wollastonite is a naturally occurring mineral form of calcium inosilicate (CaSiOs). Wollastonite is often used in industrial applications such as in ceramics and building materials. For example, wollastonite is added to ceramics to reduce shrinkage during firing and to increase both green and fired strength while maintaining brightness.

However, being a natural resource, wollastonite is becoming scarce and, consequently, expensive. Naturally occurring wollastonite particles are acicular (i.e., needle or fibre-like) and naturally occurring wollastonite can contain relatively high levels of crystalline silica, both of which contribute to wollastonite being considered a hazard for human health.

Wollastonite is often used in industrial applications where a high whiteness index is desirable. However, naturally-occurring wollastonite often contains impurities in small amounts of iron, manganese, magnesium, sodium or potassium in its structure. When there is a high amount of a colouring oxide, such as iron oxide, this lowers the whiteness of the wollastonite-containing product.

Accordingly, it would be beneficial to provide a synthetic pseudo wollastonite with low amounts of impurities, such as a low amount of iron oxide.

### SUMMARY

According to a first aspect, there is provided a synthetic pseudowollastonite, the synthetic pseudowollastonite having an X-ray diffraction pattern substantially as shown in the following Table, wherein the following major peaks are:

| 2-Theta | d-spacing (nm) |
|---|---|
| 26 ± 0.30 | 3.42 ± 0.03 |
| 27.56 ± 0.30 | 3.23 ± 0.03 |
| 31.84 ± 0.30 | 2.8 ± 0.03 |
| 36.57 ± 0.3 | 2.4 ± 0.03 |
| 45.46 ± 0.30 | 1.99 ± 0.03 |
| 45.86 ± 0.30 | 1.98 ± 0.03 |

wherein the pseudowollastonite comprises from about 0.009 wt.% to about 0.25 wt.% Fe₂O₃.

According to a second aspect, there is provided a ceramic, ceramic glaze or an engobe precursor composition comprising:
(i) the synthetic pseudowollastonite according to the first aspect;
(ii) clay; and
(iii) at least one of feldspar, quartz, zircon, ceramic materials, alumina, frits and talc.

According to a third aspect, there is provided a building material precursor composition comprising:
(i) the synthetic pseudowollastonite according to the first aspect; and
(ii) a polymer resin;
wherein the building material precursor composition optionally further comprises:
(iii) at least one of feldspar, quartz, zircon, ceramic material, frits, quartz, talc and carbonates such as calcium carbonate, calcium magnesium carbonate, magnesium carbonate (for example in the form of calcite, aragonite, dolomite, and/or magnesite), glass.

According to a fourth aspect, there is provided a process for producing a ceramic, ceramic glaze or engobe comprising:
(i) selecting the ceramic, ceramic glaze or the engobe precursor composition according to the second aspect; and
(ii) firing the composition selected in step (i);
optionally wherein:
selecting the ceramic, ceramic glaze or the engobe precursor composition comprises blending the synthetic pseudowollastonite, the clay and the at least one of feldspar, quartz, zircon, ceramic material, alumina, frits and talc; and/or
the process comprises shaping the ceramic, ceramic glaze or the engobe precursor composition prior to firing.

According to the fifth aspect, there is provided a ceramic article, for example a tile or sanitaryware article, obtained or obtainable from the process of the fourth aspect.

According to the sixth aspect, there is provided ceramic glaze or engobe obtained or obtainable from the process of the fourth aspect.

According to the seventh aspect, there is provided a process for producing a building material comprising:
(i) selecting the building material precursor composition according to the third aspect; and
(ii) curing the composition selected in step (i);
optionally wherein:
selecting the building material precursor composition comprises blending: the synthetic pseudowollastonite; and the polymer resin; and, optionally, the at least one of feldspar, quartz, zircon, ceramic material, frits, quartz, talc and carbonates such as calcium carbonate, calcium magnesium carbonate, magnesium carbonate (for example in the form of calcite, aragonite, dolomite, and/or magnesite), glass; and/or
the process comprises shaping the building material precursor composition prior to curing.

According to the eighth aspect, there is provided an engineered stone obtained or obtainable from the process of the seventh aspect.

According to the tenth aspect, there is provided a method of making a synthetic pseudowollastonite, the method comprising:
providing a mixture comprising a silica-containing material and a calcium-containing material, wherein the mixture comprises about 0.009 wt.% to about 0.25 wt.% Fe₂O₃; and heating the mixture at about 1400°C to 1450°C to form the synthetic mineral product.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### FIGURES

Embodiments will now be described by way of example only, with reference to the Figures, in which:

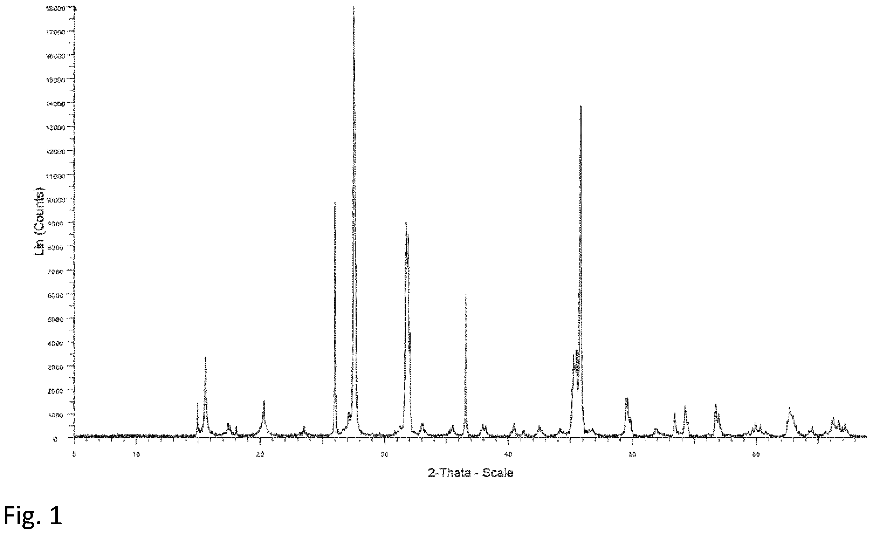

**Figure 1** is a plot of a powder X-ray diffraction pattern for the synthetic pseudowollastonite according to the present invention.
**Figure 2** provides Scanning Electron Micrographs (SEMs) showing the microstructure of various prepared samples.

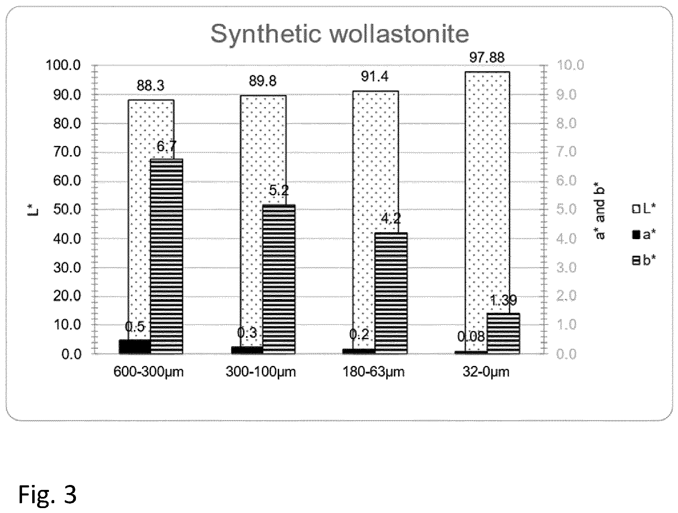

**Figure 3** is a plot of L*a*b values for various prepared samples.

### DETAILED DESCRIPTION

According to the present invention, there is provided a synthetic pseudowollastonite, the synthetic pseudowollastonite having an X-ray diffraction pattern substantially as shown in the following Table, wherein the following major peaks are:

| 2-Theta | d-spacing (nm) |
|---|---|
| 26 ± 0.30 | 3.42 ± 0.03 |
| 27.56 ± 0.30 | 3.23 ± 0.03 |
| 31.84 ± 0.30 | 2.8 ± 0.03 |
| 36.57 ± 0.3 | 2.4 ± 0.03 |
| 45.46 ± 0.30 | 1.99 ± 0.03 |
| 45.86 ± 0.30 | 1.98 ± 0.03 |

wherein the pseudowollastonite comprises from about 0.009 wt.% to about 0.25 wt.% Fe₂O₃.

The powder X-ray diffraction patterns presented herein were obtained by using CuKα radiation with a Bruker D8 ADVANCE device (available from Bruker Corporation, USA). The peak heights and the positions, as a function of 2θ where θ is the Bragg angle, can be read from the relative intensities of the peaks (adjusting for background), and d, the interplanar spacing corresponding to the recorded lines, can be calculated.

The synthetic pseudowollastonite comprises (e.g., consist of, or consist essentially of) calcium silicate (i.e., CaSiOs). Pseudowollastonite is a form of CaSiOs crystallised in the monoclinic crystal system, prismatic class, with space group C2/c. Pseudowollastonite is also known as wollastonite 7T, β-wollastonite or cyclowollastonite.

The synthetic pseudowollastonite may be at least 90 wt. % crystalline, for example at least 95 wt. % crystalline, or at least 97wt. % crystalline, based on the total weight of the synthetic pseudowollastonite. The crystalline content of the synthetic pseudowollastonite may also be determined by X-ray diffraction.

The elemental composition of the synthetic pseudowollastonite may be determined using X-ray based methods, for example, Energy Dispersive X-Ray Fluorescence (EDXRF) as set out in the Examples (for example using the Bruker AXS S8 TIGER AX15X10-A3E1A1-E2I1 spectrometer available from Bruker Corporation, USA). The elemental composition of the synthetic mineral product determined using EDXRF may be expressed in terms of the oxide equivalents of the elements present, as is standard in the field.

The synthetic pseudowollastonite may, as determined by X-ray fluorescence spectroscopy, comprise:
from about 40 wt. % to about 60 wt. %, for example, from about 45 wt. % to about 55 wt. %, or from about 48 wt. % to about 52 wt. %, SiO₂;
from about 30 wt. % to about 60 wt. %, for example, from about 42 wt. % to about 52 wt. %, or from about 45 wt. % about 50 wt. %, CaO.

Advantageously, the synthetic pseudowollastonite comprises from about 0.009 wt.% to about 0.25 wt.% Fe₂O₃, for example, no more than about 0.1 wt. %, for example, no more than about 0.05 wt. % Fe₂O₃. Wherein the wt. % is expressed in terms of the oxide equivalents of the elements present.

Optionally, the synthetic pseudowollastonite comprises, expressed in terms of the oxide equivalents of the elements present:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅.

Advantageously, the synthetic pseudowollastonite comprises no more than about 0.1 wt. %, for example, no more than about 0.05 wt. %, or no more than 0.01 wt.% TiO₂. Wherein the wt. % is expressed in terms of the oxide equivalents of the elements present.

The low amounts of impurities, and in particular the low amount of chromophore oxide content (such as Fe₂O₃ and TiO₂) achieves a whiter synthetic pseudowollastonite product. Preferably, the total amount of chromophore oxide content is <0.2 wt.%.

The silica-containing material may be any suitable material which contains silica (i.e., SiO₂).

The silica-containing material may comprise no less than about 50 wt. %, for example, no less than about 75 wt. %, or no less than about 90 wt. %, or no less than about 95 wt. %, or no less than about 99 wt. %, or no less than about 99.9 wt. %, silica. For example, the silica-containing material may consist, or consist essentially, of silica.

The silica-containing material may be selected from silica sand, quartz, fused quartz, tridymite, cristobalite, keatite, moganite, coesite, stishovite, seifertite, melanophlogite, fumed silica, silica fume, silica gel, silica aerogel, and/or any combination thereof.

Preferably, the silica-containing material comprises low amounts of impurities, such as low amounts of chromophore oxides such as from about 0.009 wt.% to about 0.2 wt.% Fe₂O₃, for example, no more than about 0.1 wt. %, for example, no more than about 0.05 wt. % Fe₂O₃. Wherein the wt. % is expressed in terms of the oxide equivalents of the elements present.

Preferably, the silica-containing material also comprises low amounts of TiO₂ such a no more than about 0.1 wt. %, for example, no more than about 0.05 wt. %, or no more than 0.01 wt.% TiO₂. Wherein the wt. % is expressed in terms of the oxide equivalents of the elements present.

Optionally, the silica-containing material comprises, expressed in terms of the oxide equivalents of the elements present:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅.

Particle size properties of particulate materials may be determined by laser diffraction. In the laser diffraction technique, particle size properties are measured by wet Malvern laser scattering (standard ISO 13320-1:2020). In this technique, the size of particles in powders, suspensions and emulsions may be measured using the diffraction of a laser beam, based on the application of Fraunhofer theory. Such a machine, for example a Malvern Mastersizer 3000 - Hydro LV (as supplied by Malvern instruments) provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by weight of the particles which have an equivalent spherical diameter less than that d₅₀ value. For the avoidance of doubt, the measurement of particle size using laser light scattering is not an equivalent method to a sedimentation method.

Details of the laser particle size measurement method used in the preparation of the present application are set out in the Examples.

The silica-containing material may have a d₁₀, by laser from about 0.5 µm to about 5.0 µm, for example, from about 1.0 µm to about 3.0 µm, or from about 1.5 µm to about 2.5 µm, or from about 1.5 µm to about 2.1 µm, or from about 2.0 µm to about 2.1 µm.

The silica-containing material may have a d₂₀, by laser, from about 2.0 µm to about 10.0 µm, for example, from about 3.0 µm to about 9.0 µm, or from about 4.0 µm to about 8.0 µm, or from about 5.0 µm to about 7.0 µm, or from about 5.0 µm to about 6.0 µm, or from about 5.5 µm to about 6.0 µm.

The silica-containing material may have a d₅₀, by laser, from about 15.0 µm to about 45.0 µm, for example, from about 17.5 µm to about 40.0 µm, or from about 20.0 µm to about 40.0 µm, or from about 25.0 µm to about 35.0 µm, or from about 27.0 µm to about 32.0 µm, or from about 28.0 µm to about 29.0 µm.

The silica-containing material may have a d₈₀, by laser, from about 50.0 µm to about 100.0 µm, for example, from about 55.0 µm to about 90.0 µm, or from about 60.0 µm to about 80.0 µm, or from about 65.0 µm to about 75.0 µm, or from about 69.0 µm to about 72.0 µm, or from about 70.0 µm to about 71.0 µm.

The silica-containing material may have a d₉₀, by laser, from about 70.0 µm to about 130.0 µm, for example, from about 80.0 µm to about 120.0 µm, or from about 90.0 µm to about 110.0 µm, or from about 95.0 µm to about 105.0 µm, or from about 95.0 µm to about 100.0 µm, or from about 96.0 µm to about 98.0 µm, or from about 97.0 µm to about 98.0 µm.

The silica-containing material may have a d₉₉, by laser, from about 120.0 µm to about 200.0 µm, for example, from about 130.0 µm to about 190.0 µm, or from about 140.0 µm to about 180.0 µm, or from about 150.0 µm to about 170.0 µm, or from about 155.0 µm to about 165.0 µm, or from about 160.0 µm to about 162.0 µm.

Preferably the silicon-containing material is sand such as silica sand.

### Calcium-containing material

The calcium-containing material may be any suitable material which contains calcium (i.e., Ca). The calcium content of the calcium-containing material may be determined using X-ray based methods, for example, Energy Dispersive X-Ray Fluorescence (EDXRF) (for example using the Xepos instrument available from SPECTRO A. I. GmbH). The calcium content of the calcium-containing material determined using EDXRF may be expressed in terms of the oxide equivalent (i.e., CaO equivalent) of the calcium present, as is standard in the field.

Expressed in terms of the oxide equivalent, the calcium-containing material may comprise no less than about 50 wt. %, for example, no less than about 75 wt. %, or no less than about 90 wt. %, or no less than about 95 wt. %, or no less than about 99 wt. %, or no less than about 99.9 wt. %, of CaO.

Preferably, the calcium-containing material comprises low amounts of impurities, such as low amounts of chromophore oxides, such as from about 0.009 wt.% to about 0.2 wt.% Fe₂O₃, for example, no more than about 0.1 wt. %, for example, no more than about 0.05 wt. % Fe₂O₃. Wherein the wt. % is expressed in terms of the oxide equivalents of the elements present.

Advantageously, the calcium-containing material comprises than no more than about 0.1 wt. %, for example, no more than about 0.05 wt. % TiO₂, or no more than 0.01 wt. % TiO₂. Wherein the wt. % is expressed in terms of the oxide equivalents of the elements present.

Optionally, the calcium-containing material comprises, expressed in terms of the oxide equivalents of the elements present:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅.

The calcium-containing material may contain calcium in the form of one or more calcium-containing compounds. The calcium-containing material may consist of, or consist essentially of, or be, one or more calcium-containing compounds.

The calcium-containing material may contain calcium in the form of one or more oxides, carbonates and/or silicates of calcium, such as calcium oxide (i.e., CaO), quick lime, slaked lime, calcium carbonate (i.e., CaCOs) and/or calcium silicate (i.e., Ca₂SiO₄).

The calcium-containing material may consist essentially of, consist of, or be, a combination of two or more of calcium oxide (i.e., CaO), calcium carbonate (i.e., CaCOs) and calcium silicate (i.e., Ca₂SiO₄).

The calcium-containing material may be selected from lime, quick lime, calcite, aragonite, vaterite, limestone, chalk, marble, travertine, ground calcium carbonate, precipitated calcium carbonate, calcium silicate, dolomite, and/or any combination thereof.

PCC may be made by methods well-known in the art. For instance, PCC may be prepared by one or more of the methods described in WO03/004414, the contents of which are incorporated herein by reference, particularly page 2, line 11 to page 3, line 38; page 4, line 29 to page 5, line 6; and page 5, line 36 to page 6, line 28 as well as examples 4 and 5.

The calcium-containing material may be a particulate material.

The calcium-containing material may have a d₁₀, by laser, from about 0.5 µm to about 6.0 µm, for example, from about 1.0 µm to about 5.0 µm, or from about 2.0 µm to about 4.0 µm, or from about 2.5 µm to about 3.5 µm, or from about 2.8 µm to about 3.1 µm, or from about 2.9 µm to about 3.0 µm.

The calcium-containing material may have a d₂₀, by laser, from about 5.0 µm to about 20.0 µm, for example, from about 7.0 µm to about 18..0 µm, or from about 9.0 µm to about 17.0 µm, or from about 10.0 µm to about 16.0 µm, or from about 11.0 µm to about 15.0 µm, or from about 12.0 µm to about 15.0 µm, or from about 12.0 µm to about 14.0 µm, or from about 13.5 µm to about 13.7 µm.

The calcium-containing material may have a d₅₀, by laser, from about 80 µm to about 300 µm, for example, from about 100 µm to about 250 µm, or from about 120 µm to about 200 µm, or from about 130 µm to about 190 µm, or from about 140 µm to about 180 µm, or from about 150 µm to about 170 µm, or from about 160 µm to about 170 µm, or from about 160 µm to about 165 µm.

The calcium-containing material may have a d₈₀, by laser, from about 300 µm to about 900 µm, for example, from about 400 µm to about 800 µm, or from about 500 µm to about 700 µm, or from about 550 µm to about 750 µm, or from about 600 µm to about 700 µm or from about 600 µm to about 650 µm, or from about 610 µm to about 630 µm, or from about 615 µm to about 620 µm.

The calcium-containing material may have a d₉₀, by laser, from about 600 µm to about 1500 µm, for example, from about 700 µm to about 1400 µm, or from about 800 µm to about 1300 µm, or from about 800 µm to about 1200 µm, or from about 900 µm to about 1100 µm, or from about 950 µm to about 1100 µm, or from about 1000 µm to about 1100 µm, or from about 1000 µm to about 1050 µm, or from about 1030 µm to about 1050 µm.

The calcium-containing material may have a d₉₅, by laser, from about 1500 µm to about 5000 µm, for example, from about 1600 µm to about 4000 µm, or from about 1700 µm to about 3000 µm, or from about 1800 µm to about 2900 µm, or from about 1900 µm to about 2800 µm, or from about 2000 µm to about 3000 µm, or from about 2200 µm to about 2700 µm, or from about 2300 µm to about 2600 µm, or from about 2400 µm to about 2600 µm, or from about 2450 µm to about 2500 µm, or from about 2480 µm to about 2500 µm.

Preferably, the calcium-containing material is limestone or lime. More preferably, the calcium-containing material is lime.

### Method of making synthetic pseudowollastonite

The method may comprise providing a mixture comprising a silica-containing material and a calcium-containing material, wherein the mixture comprises about 0.009 wt.% to about 0.25 wt.% Fe₂O₃; and heating the mixture at about 1400°C to 1450°C to form the synthetic mineral product.

For example, the mixture may comprise one single silica-containing material and one single calcium-containing material. Alternatively, the mixture may comprise one single silica-containing material and more than one calcium-containing materials. Further alternatively, the mixture may comprise more than one silica-containing materials and one single calcium-containing material. Further alternatively, the mixture may comprise more than one silica-containing materials and more than one calcium-containing materials.

The mixture may comprise the silica-containing material(s) and the calcium-containing material(s) in appropriate amounts such that the ratio of calcium (Ca) atoms to silicon (Si) atoms in the mixture is no less than about 1:2, for example, no less than about 3:4, or no less than about 9:10, or no less than about 19:20. The mixture may comprise the silica-containing material(s) and the calcium-containing material(s) in appropriate amounts such that the ratio of calcium (Ca) atoms to silicon (Si) atoms in the mixture is no more than about 2:1, for example, no more than about 4:3, or no more than about 9:10, or no more than about 20:19. The mixture may comprise the silica-containing material(s) and the calcium-containing material(s) in appropriate amounts such that the ratio of calcium (Ca) atoms to silicon (Si) atoms in the mixture is from about 1:2 to about 2:1, for example, from about 3:4 to about 4:3, or from about 9:10 to about 10:9, or from about 19:20 to about 20:19. For example, the mixture may comprise the silica-containing material(s) and the calcium-containing material(s) in appropriate amounts such that the ratio of calcium (Ca) atoms to silicon (Si) atoms in the mixture is about 1:1. It will be understood that the relative amounts of the silica-containing material(s) and the calcium-containing material(s) in the mixture needed to achieve a given ratio of calcium (Ca) atoms to silicon (Si) atoms will depend on the composition of the particular silica-containing material(s) and calcium-containing material(s) used. The ratio of calcium (Ca) atoms to silicon (Si) atoms can be determined from the quantities of the calcium-containing material(s) and the silica-containing material(s) added to the mixture and the composition of the calcium-containing material(s) and the silica-containing material(s). The compositions of the calcium-containing material(s) and the silica-containing material(s) can be determined using X-ray based methods, for example, Energy Dispersive X-Ray Fluorescence (EDXRF) (for example using the Xepos instrument available from SPECTRO A. I. GmbH).

The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no less than about 1:2, for example, no less than about 3:4, or no less than about 4:5, or no less than about 17:20, or no less than about 9:10, or no less than about 19:20.

The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no more than about 2:1, for example, no more than about 4:3, or no more than about 5:4, or no more than about 20:17, or no more than about 9:10, or no more than about 20:19, or no more than about 19:20, or no more than about 9:10, or no more than about 17:20.

In addition to the silica-containing material(s) and the calcium-containing material(s), the mixture may contain one or more other materials (e.g., one or more materials which do not contain silica or calcium in significant amounts, e.g., one or more materials which are substantially silica- and/or calcium-free) such as magnesia (i.e., MgO) and/or soda ash (i.e., Na₂CO₃).

The method may comprise milling the silica-containing material(s) and the calcium-containing material(s) together. The method may comprise milling the silica-containing material(s) and the calcium-containing material(s) together to achieve a d₈₀, by laser, no less than about 20 µm, for example, no less than about 25 µm, or no less than about 30 µm, or no less than about 33 µm, or no less than about 35 µm.

The method may comprise milling the silica-containing material(s) and the calcium-containing material(s) together in any suitable type of mill, such as a ball mill, a roller mill or a jet mill.

The method may comprise heating the mixture in a kiln about 1400°C to 1450°C, such as at 1425 °C in for example, a rotary kiln. The temperature at which the mixture is heated may be the temperature as measured at the hot spot of the kiln.

### Synthetic pseudowollastonite

According to the invention, there is provided a synthetic pseudowollastonite, the synthetic pseudowollastonite having an X-ray diffraction pattern substantially as shown in the following Table, wherein the following major peaks are:

| 2-Theta | d-spacing (nm) |
|---|---|
| 26 ± 0.30 | 3.42 ± 0.03 |
| 27.56 ± 0.30 | 3.23 ± 0.03 |
| 31.84 ± 0.30 | 2.8 ± 0.03 |
| 36.57 ± 0.3 | 2.4 ± 0.03 |
| 45.46 ± 0.30 | 1.99 ± 0.03 |
| 45.86 ± 0.30 | 1.98 ± 0.03 |

wherein the pseudowollastonite comprises from about 0.009 wt.% to about 0.25 wt.% Fe₂O₃.

Pseudowollastonite is a form of CaSiO₃ crystallised in the monoclinic crystal system, prismatic class, with space group C2/c. Pseudowollastonite is also known as wollastonite 7T, β-wollastonite or cyclowollastonite.

The synthetic pseudowollastonite may be at least 90 wt. % crystalline, based on the weight of the synthetic pseudowollastonite.

The synthetic pseudowollastonite preferably has a non-acicular particle shape. For example, the synthetic pseudowollastonite may have a blocky particle shape. For example, the particles of the synthetic pseudowollastonite may have a three-dimensional shape which is not acicular, not regular, not lamellar or platy, not fully rounded or fully parallelepipedal. The particles of the synthetic mineral product may have an aspect ratio from about 0.8 to about 2.2, for example, from about 1.0 to about 2.0, or from about 0.8 to about 1.2, or from about 1.8 to about 2.2. The particle shape of the synthetic pseudowollastonite may be observed by imaging in a scanning electron microscope (SEM). The aspect ratio of the synthetic mineral product may be measured using a morphogranulometer such as the Raman Morphologi G3-ID available from Malvern Panalytical, United Kingdom.

The synthetic pseudowollastonite may contain less than about 2 wt. % (e.g., less than about 1.0 wt. %), or less than about 1.5 wt. %, or less than about 1.2 wt. %, or less than about 1.0 wt. %, crystalline silica. Occupational exposure to respirable crystalline silica is associated with the lung disease silicosis. Products containing relatively high contents of crystalline silica may therefore be classified as dangerous to human health in some jurisdictions. A product containing less than about 1 wt. % crystalline silica content may avoid such classification.

The synthetic pseudowollastonite may comprise, as determined by X-ray fluorescence spectroscopy, no more than about 5 wt. %, for example, no more than about 4 wt. %, or no more than about 3 wt. %, constituents other than SiO₂ and CaO.

The synthetic pseudowollastonite may have a loss on ignition of no greater than about 2 wt. %, for example, no greater than about 1 wt. %.

The synthetic pseudowollastonite may have a d₉₅, by laser, less than about 3 mm.

The synthetic pseudowollastonite may have a d₂ no less than about 0.2 µm and a d₉₈ no greater than about 30 µm, as determined by laser diffraction.

The synthetic pseudowollastonite may have a d₂ no less than about 0.2 µm and a d₉₅ no greater than about 32 µm, as determined by laser diffraction.

The synthetic pseudowollastonite may have a d₂ no less than about 60 µm and a d₉₈ no greater than about 180 µm, as determined by laser diffraction.

The synthetic pseudowollastonite may have a d₂ no less than about 100 µm and a d₉₈ no greater than about 300 µm, as determined by laser diffraction.

The synthetic pseudowollastonite may have a d₂ no less than about 300 µm and a d₉₈ no greater than about 600 µm, as determined by laser diffraction.

The synthetic pseudowollastonite may have a d₂ no less than about 0.2 µm and a d₉₈ no greater than about 3 mm, as determined by laser diffraction. Preferably, the synthetic pseudowollastonite may have a d₂ no less than about 0.2 µm and a d₉₈ no greater than about 1 mm, as determined by laser diffraction.

The synthetic pseudowollastonite may have a BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g.

BET surface area of a particulate material refers to the area of the surface of the particles with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

The synthetic pseudowollastonite may comprise, as determined by X-ray fluorescence spectroscopy:
from about 40 wt. % to about 60 wt. %, for example, from about 45 wt. % to about 55 wt. %, or from about 48 wt. % to about 52 wt. %, SiO₂;
from about 40 wt. % to about 60 wt. %, for example, from about 42 wt. % to about 52 wt. %, or from about 45 wt. % about 50 wt. %, CaO;
from about 0.009 wt.% to about 0.2 wt. %, for example, no more than about 0.1 wt. %, for example, no more than about 0.05 wt. % Fe₂O₃;
wherein the synthetic pseudowollastonite has a non-acicular particle shape, for example, wherein the synthetic pseudowollastonite has a blocky particle shape; and
wherein the synthetic pseudowollastonite is crystalline.

### A ceramic, ceramic glaze or an engobe precursor composition and applications

The synthetic pseudowollastonite of the present invention may be used in various ceramic applications.

According to the present invention, there is provided a ceramic, ceramic glaze or an engobe precursor composition comprising:
(i) the synthetic pseudowollastonite described herein; and
(ii) clay; and
(iii) at least one of feldspar, quartz, zircon, ceramic materials, alumina, frits and talc.

As used herein, the term "ceramic precursor composition" means a composition which comprises materials which may be intimately mixed and milled, optionally in the presence of a liquid medium (e.g. water), shaped and fired (e.g., at a temperature of at least about 800°C) to form a ceramic article, for example, a porcelain tile.

As used herein, the term "ceramic glaze precursor composition" means a composition which may be applied (e.g., as a layer) to a ceramic article, such as a ceramic tile. The glaze may be transparent or opaque and is used to provide a glassy coating to ceramics and also for decoration purposes.

As used herein, the term "engobe precursor composition" means a composition which may be applied (for example, as a layer) to the surface of a ceramic article (e.g., earthenware or stoneware tile) or green body (e.g., tile body) or partially fired, e.g., prefired, green body and which serves as an undercoat to a glaze. Advantageously, the engobe composition does not adversely affect the optical properties (e.g., lightness, whiteness, yellowness, redness, opacity) of the ceramic article (e.g., stoneware/earthenware tile) and may enhance the optical properties of the ceramic article. The engobe composition may be applied for decorative purposes or to improve the surface texture. When a glaze is applied over the engobe the engobe may act as a buffer layer in that it is expansion compatible with both the underlying body and the overlying glaze.

The synthetic pseudowollastonite may be present in the each of the ceramic precursor composition, ceramic glaze precursor composition or engobe precursor composition in an amount of from 1 to 80 % by weight of each precursor composition, respectively.

The synthetic pseudowollastonite may be present in the ceramic precursor composition in an amount from about 1 to about 60 wt. %, for example, from about 1 to about 50 wt. %, or from about 1 to about 40 wt. %, or from about 5 to about 30 wt. %.

The synthetic pseudowollastonite may be present in the ceramic glaze precursor composition in an amount from about 1 to about 60 wt. %, for example, from about 3 to about 50 wt. %, or from about 5 to about 40 wt. %, or from about 9 to about 30 wt. %.

The synthetic pseudowollastonite may be present in the engobe precursor composition in an amount from about 1 to about 60 wt. %, for example, from about 3 to about 50 wt. %, or from about 5 to about 40 wt. %, or from about 9 to about 30 wt. %.

As used herein, the term "clay" above is intended to include a hydrous and/or non hydrous phyllosilicate such as kaolinite, illite, halloysite, smectite, talc, chlorite, or metakaolin. The ceramic precursor composition may comprise from about 15 to about 95 % by weight of clay, for example, from about 30 to about 85 % by weight clay, for example, from about 40 to about 80 % by weight clay, based on the total dry weight of the ceramic precursor composition.

As used herein, the term "frits" means a material of glassy nature which is prepared by fusion of a blend of crystalline raw materials. Frits (also known as vitrifiable frits) suitable for use in the present invention may have a composition (by chemical analysis) having an SiO₂ content of from about 40-70 %, an Al₂O₃ content of from about 2-20 %, a B₂O₃ content of from about 2-25 %, a CaO content of from about 0-50 %, for example, from about 1-15 %, a MgO content of up to about 3 %, a Na₂O content of up to about 15 %, a K₂O content of up to about 5 %, a ZrO₂ content of up to about 12 %, a BaO content of up to about 5 %, and a ZnO content of up to about 10 %. The frit may have a TiO₂ content of up to about 10 %, for example, up to about 8 %, or up to about 6 %, or up to about 4 %, or up to about 2 %, or up to about 1 %. The frit may have a Li₂O, PbO, HfO₂, P₂O₅, SrO and/or MnO content of up to about 1 %. The ceramic precursor composition may comprise frits in an amount of from about 2 to 10% by weight of the composition. In the engobe precursor composition, the frits content may be present in an amount of from 20 to 50 % by weight of the engobe or glaze precursor composition. In the glaze precursor composition, the frits content may be in an amount of from 5 to 95 % by weight of the glaze precursor composition.

Optionally, the ceramic, ceramic glaze or an engobe precursor composition comprises at least one of feldspar, quartz, zircon, ceramic material, alumina, frits and talc.

Sand may be present in an amount of from about 5 to 20% by weight of the composition. The sand may be silica sand or feldspathic sand.

The feldspar may be an alkali feldspar, for example, sodium feldspar, potassium feldspar, sodium potassium feldspar, sodium calcium feldspar, calcium felsdpar or combinations thereof. The feldspar may be pure or almost pure (i.e. >95 wt.% felsdpar) or in the form of a feldspathic sand. The feldspar may be in an amount of from 5 to 85% by weight of the precursor composition.

Quartz may be present in an amount of from 0.1 to 60% by weight of the precursor composition, for example 0.1 to 40 %, or 0.1 to 30%, or 0.1 to 10%, by weight of the precursor composition.

For example quartz may be pure, almost pure (i.e. > 95 wt.%), or in the form of silica sand. Alternatively, the precursor composition may comprise no quartz.

Zircon (also known as zirconium silicate) may be present in an amount of from 1 to 20 % by weight of the precursor composition.

Ceramic materials are already fired ceramic compositions, for example recycled ceramics (but not limited to these), and may be milled. Ceramic materials may be present in an amount from 0.01 to 45 wt.%, for example from 5 to 45 wt.%, by weight of the precursor composition.

Alumina may be present in an amount of from 0.01 to 60 %, for example, from 0.1 to 40 %, or from 1 to 20 %, by weight of the precursor composition. The alumina may be calcined. Alternatively, the precursor composition may not comprise any alumina.

Talc may be present in an amount of 1 to 10 %, for example, from 2 to 8 %, or from 3 to 7 %, by weight of the precursor composition. Alternatively, the precursor composition may not comprise any talc.

The precursor compositions described above may also further include minor proportions of other ingredients such as calcium carbonate, dolomite, nepheline syenite, mica, silica, bauxite, perlite, diatomaceous earth, an alkaline earth metal carbonate, phosphate or sulphate. The proportions of the various ingredients used in the composition vary according to the properties required in the fired ceramic article. This would be well understood by the skilled person.

The precursor compositions may be in the form of a powder, granular form, mouldable mixture or slurry. The precursor composition may be a ready-to-shape precursor composition. By "ready-to-shape" is meant a precursor composition which is of a form suitable for shaping, i.e. pressing, casting, pressure casting, or extrusion, and which does not require any additional beneficiation, classification, sizing or other processing prior to shaping.

### A process for producing a ceramic, ceramic glaze or engobe

According to the present invention, there is provided a process for producing a ceramic, ceramic glaze or engobe comprising:
(i) selecting the ceramic, ceramic glaze or the engobe precursor composition described above; and
(ii) firing or curing the composition selected in step (i).

For step (i) of the process, the ceramic, ceramic glaze or the engobe precursor composition raw materials are selected from the list of materials described above.

For the formation of a ceramic, the selected raw materials are shaped into green body by any known ceramic forming process. Forming is making the mixed material into a green body of any desirable form or shape, e.g., a plate (e.g., tile), panel or brick, cylinder, sphere, or a complex shape such as a sanitaryware article. It may involve any one of conventional processes such as extrusion, slip-casting, pressure-casting, throwing, tape-casting, injection molding, or pressing, including dry pressing, isostatic pressing, or hot isostatic pressing. Pressing may be carried out under any suitable pressure. For example, a pressure of at least about 20 bar, or of at least about 30 bar, or at least about 40 bar, or at least about 50 bar.

The prepared body is then dried, for example, at a temperature of at least about 100°C, e.g., about 105°, and fired at a suitable temperature for a suitable time to form a fired ceramic body. The drying and firing conditions will vary depending on the ceramic processing conditions composition, forming, size of green body and nature of equipments. Firing may be conducted in any suitable oven or kiln.

The firing may be conducted at a temperature of at least 900°C, for example, at least about 1000°C, or at least about 1100°C, or at least about 1200°C, or at least 1250°C, or at least about 1300°C, or at least about 1350°C, or at least about 1400°C, or at least about 1450°C. The firing temperature may be less than about 1500°C, for example, less than about 1450°C, or less than about 1300°C.

Firing time may be between about 30 minutes and 48 hours, for example, from about 1 hours to about 36 hours, for example, from about 3 hours to about 24 hours.

For the formation of the engobe composition, the engobe composition, in wetted form, is applied to a wetted surface of a shaped ceramic precursor composition, for example, a wetted surface of a shaped ceramic precursor composition shaped as a ceramic tile. The engobe composition may be applied using conventional casting methods and equipment, e.g., a slit applicator, bell, or double disc devices.

The engobe-coated shaped ceramic precursor composition may then be dried, for example, at a temperature of at least about 70°C, e.g., at least about 100°C, e.g., about 105°C, and then fired for a suitable period of time, as described above. In certain embodiments the engobe-coated shaped ceramic precursor composition is fired, for example the firing is conducted over a period of 30 min - 48h, 1h - 36h, 3h - 24h. Suitable firing temperatures are described above in connection with the firing of a green body. The firing may be conducted in a gas kiln.

For the formation of the glaze composition, the glaze composition may be provided in dry powder form. The selected set of raw materials are thoroughly mixed and melted in a furnace with a very high temperature (1300° C to about 1400° C) for a period of about 1 hour to about 4 hours to obtain the molten glass to prepare molten raw materials. The molten raw materials are poured into water to obtain glass frits. The glass frits are ground in a mill to a fine powder, which is then used as a glaze. Any suitable grinding machine such as, but not limited to, a roll crusher, a ball mill or an impeller breaker can be used for grinding the set of raw materials and as such those techniques would be apparent to those ordinarily skilled in the art. These glazes are applied on the ceramic article and fired at high temperature to obtain the final glazed ceramic article. The glazed shaped ceramic precursor composition is fired at a temperature of about 950° C to about 1400° C, for example, from about 1000° C to about 1300° C, or from about 1100° C to about 1300° C, to fuse the glass ceramic glaze composition to a surface of the glass ceramic substrate, for a period of about 12 minutes to about 1 hour 30 minutes. Alternatively, these glazes may be applied on the shaped ceramic precursor composition and fired at high temperature of approximately to obtain the final glazed ceramic article. Suitable firing temperatures are described above in connection with the firing of a green body.

According to the present invention, there is provided a ceramic article, for example a tile or sanitaryware article, obtained or obtainable from the process described above.

According to the present invention, there is provided ceramic glaze or engobe obtained or obtainable from the process described above.

The formed ceramic article, or the ceramic glaze or engobe may have certain optical properties such as:
(i) a whiteness index, Wcie, of at least about 65, for example, at least about 70; and/or
(ii) a lightness, L*, of at least about 87.0, for example, at least about 90.0, or at least about 93.0; and/or
(iii) a yellowness, b*, of less than about 4.0, for example, less than about 3; and a redness, a*, of less than about 0, for example, less than about -0.5.

The high whiteness of the formed ceramic article/glaze/engobe is due to low amounts of colouring oxides (chromophores such as Fe₂O₃ and TiO₂) present in the synthetic pseudowollastonite composition.

Optical properties may be determined in accordance with CIE publication 15.2(1986), section 4.2, which contains details on this colour scale. This scale provides a standard, approximately uniform color scale enabling comparison of colour values.

According to this scale, differences between points plotted in the color space correspond to visual differences between the colors plotted. The CIELAB color space is organized in a cube form. The L* axis runs from the top to bottom. The maximum for L* is 100, which represents a perfect reflecting diffuser. The minimum for L* is zero, which represents black. The a* and b* axes have no specific numerical limits. Positive a* is red. Negative a* is green. Positive b* is yellow. Negative b* is blue.

THE CIELAB colour scale maybe used on any object whose color may be determined. It is used extensively in many industries. It provides a standard scale for comparison of color values.

### - conditions for measurement

Instrumental: Konica Minolta CM3700 A color measurement instrument in reflectance mode
lluminant: D₆₅
Standard Observer Function: 10 degree

### A building material precursor composition and applications

The synthetic pseudowollastonite of the present invention may be used in various building material applications.

According to the present invention, there is provided a building material precursor composition comprising the synthetic pseudowollastonite described herein and a polymer resin. Optionally, the building material precursor composition further comprises at least one of feldspar, quartz, zircon, ceramic material, frits, quartz, talc and carbonates such as calcium carbonate, calcium magnesium carbonate, magnesium carbonate (for example in the form of calcite, aragonite, dolomite, and/or magnesite), glass.

As used herein, the term "building material precursor composition" means a composition which comprises materials which may be intimately mixed and milled, optionally in the presence of a liquid medium (e.g. water) or in the presence of polymer resin acting as binder component. The composition may then be shaped and then cured.

The synthetic pseudowollastonite may be present in the building precursor composition in an amount of from 1 to 99 wt.%, for example, from 1 to 97 wt. %, or from 5 to 97 wt. %, by weight of the building precursor composition.

The feldspar may be an alkali feldspar, for example, sodium feldspar, potassium feldspar, sodium potassium feldspar, sodium calcium feldspar, calcium felsdpar or combinations thereof. The feldspar may be pure or almost pure (i.e. >95 wt.% felsdpar) or in the form of a feldspathic sand. The feldspar may be in an amount of from 5 to 90% by weight of the precursor composition.

Quartz may be present in an amount of from 0.1 to 50% by weight of the precursor composition, for example 0.1 to 30 %, or 0.1 to 10 %, by weight of the precursor composition. For example quartz may be pure, almost pure (i.e. > 95 wt.%), or in the form of silica sand. Alternatively, the precursor composition may comprise no quartz.

Zircon (also known as zirconium silicate) may be present in an amount of from 5 to 20 % by weight of the precursor composition.

Ceramic materials may be present in an amount of from 5 to 90 % by weight of the precursor composition.

Talc may be present in an amount of 5 to 90 % by weight of the precursor composition.

The term "ceramic material" means any prefired ceramic materials, such as waste or recycled ceramic materials. The ceramic material may be present in an amount of from 10 to 70 wt.% by weight of the building precursor composition.

The term "glass" means any preformed glass material (distinct from frits). The glass material may be waste or recycled glass materials. The glass may be present in an amount of from 5 to 90 wt.% by weight of the building precursor composition.

Carbonates such as chalk, calcite or dolomite may be present in an amount of from 0.1 to 10 % by weight of the building composition.

The term "polymer resin" is intended to encompass well-known polymer resins used in the building material industry and include, but are not limited to: epoxy, polyester, vinyl ester and polyurethane. Suitable polymer resins are included in an amount of from, for example, from about 0.01 to about 15.0 wt. %, for example, from about 1.0 to about 10 wt. %, or from about 2.0 to about 8.0 wt. %, or from about 2.0 to about 7.0 wt. %, or from about 3.0 to about 6.0 wt. %. Suitable polymer resins are well known to those skilled in the art.

### A process for producing a building material

According to the present invention, there is provided a process for producing a building material comprising:
(i) selecting the building material precursor composition described above;
(ii) curing the composition selected in step (i).

The process may optionally comprise a milling step, wherein the building precursor composition is milled prior to firing or curing the composition. The milling techniques are as described above for the ceramic articles. Optionally, the above process further comprises a shaping step to form the building material into a suitable shape such as a brick, a tile, or a countertop. The shaping techniques are vibrating, pressing (different from ceramics ; lower pressure for example).

According to the present invention, there is provided an engineered stone obtained or obtainable from the process described above.

The process of the present invention may also be used to form building materials such as a brick, a block, a tile, a composite board, a basin, a column, a slab, a countertop.

### EXAMPLES

### Example 1

A synthetic pseudowollastonite was prepared as follows.

A raw mixture is prepared by selecting a silica-containing material (silica sand) and a calcium-containing material (limestone). Table 1 shows the composition mixture.

**Table 1**

| **Component of mixture** | **Amount present in mixture (wt. %)** |
|---|---|
| Silica sand* | 51.7 |
| Limestone** | 48.3 |

| | |
|---|---|
| * Silica sand available from Sibelco ** Limestone (Limestone available from Samin) | |

The raw material characterization (analysed using XRF) of the components is as follows:

| **Component** | **SiO₂** | **Al₂O₃** | **Fe₂O₃** | **CaO** | **MgO** | **SO₃** | **K₂O** | **Na₂O** | **TiO₂** | **P₂O₅** | **Mn₂O₃** | **Cr₂O₃** |
|---|---|---|---|---|---|---|---|---|---|---|---|---|
| **Silica sand** | 98.26 | | 0.03 | 0.02 | | 0.08 | | 0.05 | 0.04 | 0.02 | 0.01 | 0.01 |
| **Limestone** | | | | 99.5 | | | | | | | | |

As can be seen from the above table. The raw materials have high purity and have been selected for their high purity.

The mixture was co-milled in a ball mill to achieve a d₈₀ particle size, as measured by laser, of about 60 µm. Batches of 700 - 800 g were calcined at 1425 °C for 2 hours.

The synthetic mineral product was cooled and then roughly milled in a hammer mill, and then milled for targeted fineness in a jet mill.

The final product has a very high amount of pseudowollastonite (~ 97 wt%).

### Example 2

| | SiO₂ | Al₂O₃ | Fe₂O₃ | TiO₂ | CaO | MgO | Na₂O | K₂O | P₂O₅ | MnO | Loss on ignition |
|---|---|---|---|---|---|---|---|---|---|---|---|
| **Chalk** | 4.3 | 0.1 | 0.16 | 0.01 | 55.32 | 0.37 | 0.03 | 0.03 | 0 | 0 | 41.68 |
| **Calcite** | 0.03 | 0 | 0.088 | 0 | 55.78 | 0.23 | 0 | 0 | 0 | 0 | 43.9 |
| **W1** | 53.3 | 1 | 0.46 | 0.04 | 39.97 | 2.2 | 0.24 | 0.18 | 0.03 | 0.01 | 2.41 |
| **W2** | 53.9 | 0.4 | 0.23 | 0.02 | 46.34 | 0.56 | 0 | 0.04 | 0.01 | 0.03 | 0.89 |
| **W3** | 40.9 | 0.3 | 0.23 | 0.02 | 48.53 | 0.57 | 0 | 0.06 | 0.05 | 0.03 | 11.78 |
| **W4** | 51.2 | 0.7 | 0.19 | 0.04 | 44.78 | 0.83 | 0.03 | 0.05 | 0.01 | 0.03 | 0.25 |
| **W5** | 52.8 | 0.9 | 0.11 | 0.03 | 43.68 | 0.27 | 0.04 | 0.02 | 0.11 | 0.01 | 0.15 |

W1, W2 and W3 are naturally derived wollastonite samples with varying levels of silicon-containing and calcium-containing components. W4 and W5 are synthetic pseudowollastonite samples prepared according to the present invention. The inventive samples have low levels of Fe₂O₃. The inventive samples showed a significant reduction on the LOI.

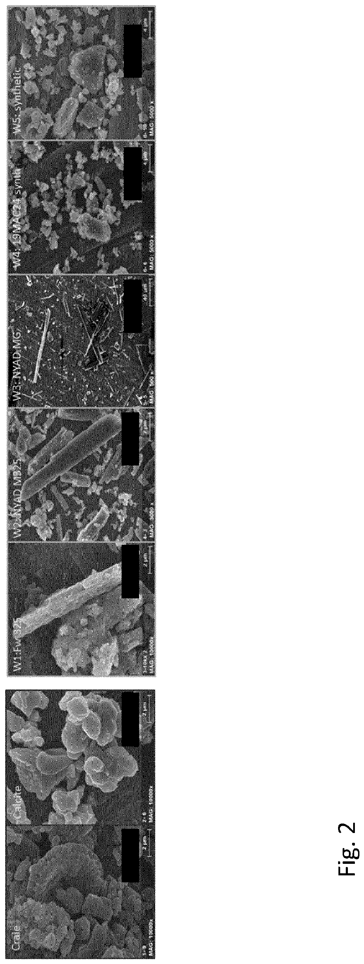

The inventive samples W4 and W5 the SEM showed that the inventive product was found to have a microstructure made of grains, not needles. Figure 2 shows the microstructure of all the tested samples.

### Example 3

A synthetic pseudowollastonite was prepared in accordance with the method described above for Example 1 and analysed using XRF. The following prepared pseudowollastonite is suitable for use in building materials such as in an engineered stone.

The synthetic pseudowollastonite comprises the following wt.% of components.

| Al₂O₃ | SiO₂ | K₂O | Fe₂O₃ | TiO₂ | CaO | MgO | Na₂O | P₂O | LOI |
|---|---|---|---|---|---|---|---|---|---|
| 0.5 | 51.05 | 0.02 | 0.06 | 0.01 | 47.82 | 0.38 | 0.03 | 0.005 | 0.13 |

The L*a*b values were determined for the followed PSD ranges of the synthetic pseudowollastonite materials. The conditions for measurement of the color values are the same as those described above.

| **PSD range** | **L*** | **a*** | **b*** |
|---|---|---|---|
| 600-300µm^{†} | 88.3 | 0.5 | 6.7 |
| 300-100µm^{†} | 89.8 | 0.3 | 5.2 |
| 180-63µm^{†} | 91.4 | 0.2 | 4.2 |
| 32-0.2µm^{††} | 97.88 | 0.08 | 1.39 |

| | | | |
|---|---|---|---|
| ^{†}As determined by sieve analysis. ^{††}32 µm is the d₁₀₀ and 0.2 µm is the d₀ as determined by laser diffraction (i.e. the laser diffraction method used cannot measure particle sizes below 0.2 µm). | | | |

The results demonstrate that the synthetic pseudowollastonite material having a lower PSD range results in a higher percentage of L* value and therefore a whiter appearance.

## Claims

1. A synthetic pseudowollastonite, the synthetic pseudowollastonite having an X-ray diffraction pattern substantially as shown in the following Table, wherein the following major peaks are:
| 2-Theta | d-spacing (nm) |
|---|---|
| 26 ± 0.30 | 3.42 ± 0.03 |
| 27.56 ± 0.30 | 3.23 ± 0.03 |
| 31.84 ± 0.30 | 2.8 ± 0.03 |
| 36.57 ± 0.3 | 2.4 ± 0.03 |
| 45.46 ± 0.30 | 1.99 ± 0.03 |
| 45.86 ± 0.30 | 1.98 ± 0.03 |
wherein the pseudowollastonite comprises from about 0.009 wt.% to about 0.25 wt.% Fe₂O₃.

2. The synthetic pseudowollastonite according to claim 1, wherein the synthetic pseudowollastonite is at least 90 wt.% crystalline, based on the total weight of the synthetic pseudowollastonite.

3. The synthetic pseudowollastonite according to claim 1 or claim 2, wherein:
(a) the synthetic pseudowollastonite comprises, as determined by X-ray fluorescence spectroscopy:
from about 40 wt. % to about 60 wt. %, for example, from about 45 wt. % to about 55 wt. %, or from about 48 wt. % to about 52 wt. %, SiO₂;
from about 30 wt. % to about 60 wt. %, for example, from about 42 wt. % to about 52 wt. %, or from about 45 wt. % about 50 wt. %, CaO;
from about 0.009 wt.% to about 0.25 wt. %, for example, no more than about 0.1 wt. %, for example, no more than about 0.08 wt. % Fe₂O₃; and
optionally:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅;
(b) the synthetic pseudowollastonite comprises, as determined by X-ray fluorescence spectroscopy, no more than about 5 wt. %, for example, no more than about 4 wt. %, or no more than about 3 wt. %, constituents other than SiO₂ and CaO;
(c) the synthetic pseudowollastonite has a loss on ignition of no greater than about 2 wt. %, for example, no greater than about 1 wt. %;
(d) the synthetic pseudowollastonite has a non-acicular particle shape, for example, wherein the synthetic pseudowollastonite has a blocky particle shape; and/or
(e) the synthetic pseudowollastonite contains less than about 2 wt. % crystalline silica.

4. The synthetic pseudowollastonite according to any preceding claim, wherein the synthetic pseudowollastonite comprises, as determined by X-ray fluorescence spectroscopy:
from about 40 wt. % to about 60 wt. %, for example, from about 45 wt. % to about 55 wt. %, or from about 48 wt. % to about 52 wt. %, SiO₂;
from about 40 wt. % to about 60 wt. %, for example, from about 42 wt. % to about 52 wt. %, or from about 45 wt. % about 50 wt. %, CaO;
from about 0.009 wt.% to about 0.2 wt. %, for example, no more than about 0.1 wt. %, for example, no more than about 0.05 wt. % Fe₂O₃;
wherein the synthetic pseudowollastonite has a non-acicular particle shape, for example, wherein the synthetic pseudowollastonite has a blocky particle shape;
and wherein the synthetic pseudowollastonite is at least 90 wt.% crystalline, based on the total weight of the synthetic pseudowollastonite.

5. A ceramic, ceramic glaze or an engobe precursor composition comprising:
(i) the synthetic pseudowollastonite according to any one of claims 1 to 4;
(ii) clay; and
(iii) at least one of feldspar, quartz, zircon, ceramic material, alumina, frits and talc.

6. The ceramic, ceramic glaze or engobe precursor composition according to claim 5 wherein the synthetic pseudowollastonite is present in an amount of from 1 to 80 wt. % of the precursor composition.

7. A building material precursor composition comprising:
(i) the synthetic pseudowollastonite according to any one of claims 1 to 4; and
(ii) a polymer resin;
wherein the building material precursor composition optionally further comprises:
(iii) at least one of feldspar, quartz, zircon, ceramic material, frits, quartz, talc and carbonates such as calcium carbonate, calcium magnesium carbonate, magnesium carbonate (for example in the form of calcite, aragonite, dolomite, and/or magnesite), glass.

8. The building material precursor composition according to claim 7, wherein the synthetic pseudowollastonite is present in an amount of from 1 to 99 wt.% of the precursor composition.

9. A process for producing a ceramic, ceramic glaze or engobe comprising:
(i) selecting the ceramic, ceramic glaze or the engobe precursor composition according to claim 5 or claim 6; and
(ii) firing the composition selected in step (i);
optionally wherein:
selecting the ceramic, ceramic glaze or the engobe precursor composition comprises blending the synthetic pseudowollastonite, the clay and the at least one of feldspar, quartz, zircon, ceramic material, alumina, frits and talc; and/or
the process comprises shaping the ceramic, ceramic glaze or the engobe precursor composition prior to firing.

10. A ceramic article, for example a tile or sanitaryware article, obtained or obtainable from the process of claim 9.

11. Ceramic glaze or engobe obtained or obtainable from the process of 9.

12. The ceramic article according to claim 10 or the ceramic glaze or engobe according to claim 11, having:
(i) a whiteness index, Wcie, of at least about 65, for example, at least about 70; and/or
(ii) a lightness, L*, of at least about 87.0, for example, at least about 90.0, or at least about 93.0; and/or
(iii) a yellowness, b*, of less than about 4.0, for example, less than about 3; and a redness, a*, of less than about 0, for example, less than about -0.5.

13. A process for producing a building material comprising:
(i) selecting the building material precursor composition according to claim 7 or claim 8; and
(ii) curing the composition selected in step (i);
optionally wherein:
selecting the building material precursor composition comprises blending: the synthetic pseudowollastonite; and the polymer resin; and, optionally, the at least one of feldspar, quartz, zircon, ceramic material, frits, quartz, talc and carbonates such as calcium carbonate, calcium magnesium carbonate, magnesium carbonate (for example in the form of calcite, aragonite, dolomite, and/or magnesite), glass; and/or
the process comprises shaping the building material precursor composition prior to curing.

14. An engineered stone obtained or obtainable from the process of claim 13.

15. A method of making a synthetic pseudowollastonite, the method comprising:
providing a mixture comprising a silica-containing material and a calcium-containing material, wherein the mixture comprises about 0.009 wt.% to about 0.25 wt.% Fe₂O₃; and heating the mixture at about 1400°C to 1450°C to form the synthetic pseudowollastonite.
